# EUROPEAN PATENT SPECIFICATION

(11) **EP 4 269 074 B1**
(45) Date of publication and mention of the grant of the patent: **26.11.2025**
(21) Application number: 22883838.9
(22) Date of filing: 07.10.2022
(51) Int. Cl.: B29C 65/18, H01M 10/04, H01M 50/105, H01M 50/184, B29L 31/34

(54) **GAP ADJUSTMENT DEVICE AND SECONDARY BATTERY SEALING EQUIPMENT INCLUDING SAME**
SPALTANPASSUNGSVORRICHTUNG UND SEKUNDÄRBATTERIEDICHTUNGSAUSRÜSTUNG DAMIT
DISPOSITIF DE RÉGLAGE D'ÉCARTEMENT ET ÉQUIPEMENT D'ÉTANCHÉITÉ DE BATTERIE SECONDAIRE LE COMPRENANT

(30) Priority: 22.10.2021 KR 20210142161
(43) Date of publication of application: 01.11.2023
(73) Proprietor: LG Energy Solution, Ltd., Seoul 07335 (KR)
(72) Inventor: LEE, Eung Hyun, Daejeon 34122 (KR); OH, Woong Gun, Daejeon 34122 (KR); KIM, Gee Hwan, Daejeon 34122 (KR); YEO, Sang Uk, Daejeon 34122 (KR)
(74) Representative: Plasseraud IP
(86) International application number: PCT/KR2022/015172
(87) International publication number: WO 2023/068615

(56) References cited:
- JP-A- 2003 157 903
- KR-A- 20190 114 645
- KR-B1- 101 517 062
- KR-B1- 101 762 807
- KR-B1- 102 164 254
- KR-B1- 102 254 203

## Description

### TECHNICAL FIELD

### TECHNICAL FIELD

The present invention relates to a gap adjustment device capable of adjusting a gap between a pair of sealing blocks in a stepwise manner and secondary battery sealing equipment including same.

### BACKGROUND ART

In general, secondary batteries refer to chargeable and dischargeable batteries unlike primary batteries that are not chargeable. Such a secondary battery is being widely used in phones, laptop computers, camcorders, electric vehicles, and the like.

These secondary batteries are classified into a cantype secondary battery in which an electrode assembly is embedded in a metal can and a pouch-type secondary battery in which an electrode assembly is embedded in a pouch. The cantype secondary battery has a structure that includes an electrode assembly, an electrolyte, a can for accommodating the electrode assembly and the electrolyte, and a cap assembly mounted to an opening of the can. Also, the pouch-type secondary battery has a structure that includes an electrode assembly, an electrolyte, and a pouch for accommodating the electrode assembly and the electrolyte.

The pouch-type secondary battery described above is manufactured by accommodating the electrode assembly in the pouch and then airtightly sealing an edge surface of the pouch. Here, the edge surface of the pouch is sealed using a secondary battery sealing apparatus, and the secondary battery sealing apparatus includes a pair of sealing blocks that press and seal both surfaces of a sealing portion provided in the pouch.

Meanwhile, in order to adjust the thickness of the sealing portion of the pouch, the secondary battery sealing apparatus includes a shim ring which is inserted between the pair of sealing blocks to adjust a gap between the pair of sealing blocks.

However, the shim ring in the secondary battery sealing apparatus according to the related art needs to be inserted or removed between the pair of sealing blocks whenever the thickness of the sealing portion of the pouch is adjusted, and thus, the continuity and efficiency of work are deteriorated. In particular, the shim rings having various heights have to be provided to adjust gaps between the pair of sealing blocks in a stepwise manner, and thus, there is a limitation in that cost is high.

Examples of background art can be found in KR101762807B1.

### DISCLOSURE OF THE INVENTION

### TECHNICAL PROBLEM

An object achieved by the present invention is to provide a gap adjustment device and secondary battery sealing equipment including same, which allow a gap between a pair of sealing blocks to be adjusted in a stepwise manner by simple operation. As a result, continuity and efficiency of work may be enhanced, and in particular, cost may be greatly reduced.

### TECHNICAL SOLUTION

Secondary battery sealing equipment for achieving the above object is to press and seal a sealing portion of a pouch, the secondary battery sealing equipment including: a pair of sealing blocks configured to press and seal the sealing portion of the pouch; and a gap adjustment device configured to adjust a gap between the pair of sealing blocks, wherein the gap adjustment device includes: supporting pieces provided at respective ends of one sealing block that presses one surface of the sealing portion of the pouch; and gap adjustment pieces rotatably coupled to respective ends of the other sealing block that presses the other surface of the sealing portion of the pouch, wherein each of the gap adjustment pieces is provided with a plurality of adjustment surfaces having different heights along a circumferential surface, and one of the plurality of adjustment surfaces having different heights when rotating is supported by each of the supporting pieces to adjust the gap between the pair of sealing blocks.

When viewed on the basis of the other sealing block, a height of the adjustment surface having the lowest height among the plurality of adjustment surfaces may be greater by 119 µm to 139 µm than that of a pressing surface of the other sealing block.

When viewed on the basis of the one sealing block, a height of a supporting surface of the supporting piece supported by the adjustment surface may be greater by 119 µm to 139 µm than that of a pressing surface of the one sealing block.

The plurality of adjustment surfaces may have the same height difference from the adjustment surface having the lowest height to the adjustment surface having the greatest height.

The plurality of adjustment surfaces may have a height difference of 18 to 22 µm from the adjustment surface having the lowest height to the adjustment surface having the greatest height.

The plurality of adjustment surfaces may be arranged in order of height along the circumference of the gap adjustment piece.

The supporting surface of the supporting piece and the plurality of adjustment surfaces, which are supported by each other, may be provided with horizontal surfaces to come into surface contact with each other.

A boundary surface between the corresponding adjustment surfaces may be formed as an inclined surface.

Each of the supporting piece and the gap adjustment piece may be made of alloy tool steel.

The secondary battery sealing equipment may include a coupling bolt that rotatably couples the gap adjustment piece to the other sealing block, wherein, when the coupling bolt is tightened, the gap adjustment piece is fixed to the sealing block and not allowed to move, but when loosened, the gap adjustment piece is not fixed and allowed to rotate about the coupling bolt.

The supporting piece may be detachably coupled to the one sealing block.

Also, a gap adjustment device according to the present invention is to adjust a gap between a pair of sealing blocks that seal a sealing portion of a pouch, the gap adjustment device including: supporting pieces provided at respective ends of one sealing block that presses one surface of the sealing portion of the pouch; and gap adjustment pieces rotatably coupled to respective ends of the other sealing block that presses the other surface of the sealing portion of the pouch, wherein each of the gap adjustment pieces is provided with a plurality of adjustment surfaces having different heights along a circumferential surface, and one of the plurality of adjustment surfaces having different heights when rotating is supported by each of the supporting pieces to adjust the gap between the pair of sealing blocks.

### ADVANTAGEOUS EFFECTS

Secondary battery sealing equipment according to the present invention includes a pair of sealing blocks for pressing and sealing a sealing portion of a pouch; and a gap adjustment device for adjusting a gap between the pair of sealing blocks. The gap adjustment device includes a supporting piece and a plurality of adjustment pieces having different heights. Due to this feature, it is possible to adjust the gap between the pair of sealing blocks in a stepwise manner. As a result, continuity and efficiency of work may be enhanced, and in particular, cost may be greatly reduced.

### BRIEF DESCRIPTION OF THE DRAWINGS

FIG. 1 is a side view illustrating secondary battery sealing equipment according to a first embodiment of the present invention.
FIG. 2 is an enlarged view of a region A shown in FIG. 1.
FIG. 3 is a perspective view illustrating a supporting piece in the secondary battery sealing equipment according to the first embodiment of the present invention.
FIG. 4 is a perspective view illustrating a gap adjustment piece of the secondary battery sealing equipment according to the first embodiment of the present invention.
FIG. 5 is a plan view of FIG. 4.
FIG. 6 is a side view of FIG. 4.
FIGS. 7 and 8 are views showing use states of the secondary battery sealing equipment according to the first embodiment of the present invention. FIG. 7 is a view illustrating a state in which a supporting piece is supported by the adjustment surface having the greatest height in a gap adjustment piece, and FIG. 8 is a view illustrating a state in which the supporting piece is supported by the adjustment surface having the lowest height in the gap adjustment piece.
FIG. 9 is a perspective view illustrating secondary battery sealing equipment according to a second embodiment of the present invention.

### MODE FOR CARRYING OUT THE INVENTION

Hereinafter, embodiments of the present invention will be described in detail with reference to the accompanying drawings so as to be easily carried out by a person skilled in the art to which the present invention pertains. However, the present invention may be embodied in various different forms, and is not limited to the embodiments described herein. Also, in the drawings, parts irrelevant to the description will be omitted to clearly describe the present invention, and similar elements will be designated by similar reference numerals throughout the specification.

In addition, pouches may have different thicknesses depending on the products or sizes to which they are applied, and it is necessary to adjust a gap between pressing surfaces provided on a pair of sealing blocks according to the thickness of the pouch. That is, when the pair of sealing blocks strongly press a sealing portion of the pouch, the sealing portion may be damaged. However, when pressing a sealing portion weakly, sealing strength of the sealing portion may be deteriorated. Accordingly, as the gap between the pressing surfaces provided on the pair of sealing blocks is adjusted according to the thickness of the pouch, the sealing portion of the pouch may be stably sealed. Here, when secondary battery sealing equipment according to a first embodiment of the present invention is used, a gap between the pressing surfaces provided on the pair of sealing blocks may be adjusted in a multi-stepwise manner. As a result, the present invention may be used compatibly with pouches having various thicknesses.

Hereinafter, the secondary battery sealing equipment according to the first embodiment of the present invention will be described in detail with reference to the accompanying drawings.

### [Secondary battery sealing equipment according to the first embodiment of the present invention]

The secondary battery sealing equipment according to the first embodiment of the present invention has a structure capable of adjusting a gap between a pair of sealing blocks that press and seal a sealing portion of a pouch in a multi-stepwise manner. Accordingly, the gap between the pair of sealing blocks may be conveniently adjusted in a multi-stepwise manner, and as a result, the convenience and efficiency of use and the continuity of work may be improved.

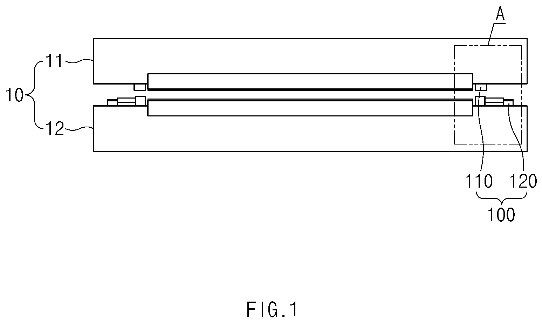

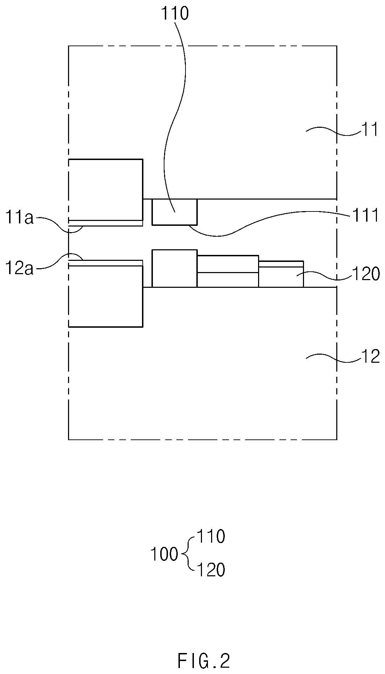

That is, as illustrated in FIGS. 1 to 8, the secondary battery sealing equipment according to the first embodiment of the present invention includes a pair of sealing blocks 10 and 20 and a gap adjustment device 100 for adjusting the gap between the pair of sealing blocks 10 and 20 in a multi-stepwise manner.

### Sealing block

The sealing blocks 10 and 20 are provided in a pair. When referring to FIG. 1, the pair of sealing blocks 10 and 20 are provided symmetrically in the up-down direction. In addition, the pair of sealing blocks 10 and 20 have pressing surfaces 11 and 21 which are respectively formed on surfaces corresponding to each other, and a sealing portion (not shown) of a pouch may be pressed and sealed by the pressing surfaces 11 and 21 provided on the pair of sealing blocks 10 and 20.

Here, referring to FIG. 1, a sealing block 10 disposed on the upper portion of the pair of sealing blocks 10 and 20 is referred to as one sealing block, and a sealing block 20 disposed on the lower portion is referred to as the other sealing block.

### Gap adjustment device

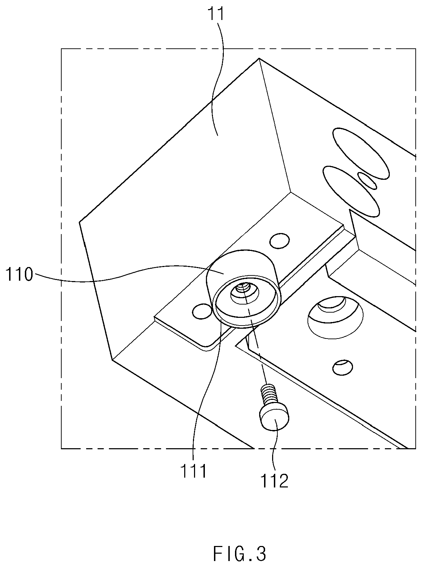

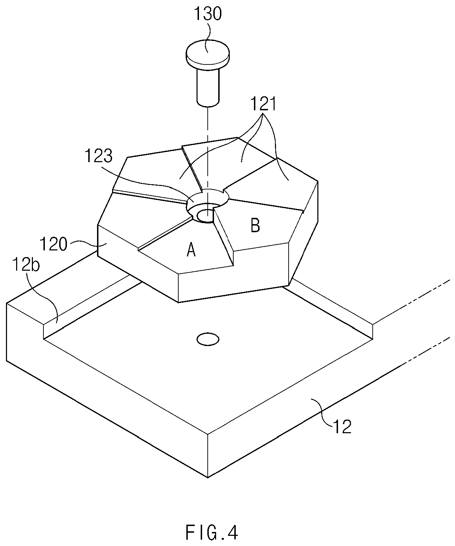

Referring to FIGS. 3 and 4, a gap adjustment device 100 may adjust a gap between the pair of sealing blocks in a multi-stepwise manner. That is, the gap adjustment device 100 may include a supporting piece 110 and a gap adjustment piece 120.

Referring to FIG. 3, the supporting piece 110 has a cylindrical shape and is provided at each of both ends of the one sealing block 10 (left and right ends of the one sealing block as illustrated in FIG. 1) that presses one surface of the sealing portion of the pouch. In particular, one surface (upper surface when viewed in FIG. 1) of the supporting piece 110 is coupled to the one sealing block by a fixing bolt 112, and the other surface (lower surface when viewed in FIG. 1) forms a supporting surface 111 to be supported by the gap adjustment piece.

Here, the fixing bolt 112 includes a threaded portion which is coupled to the one sealing block after passing through an insertion groove formed in the supporting piece 110 and a head portion which is supported by an outer circumferential surface of the insertion groove.

In particular, the supporting piece 110 may be detachably fixed to the one sealing block 10 by the fixing bolt 112. Accordingly, when the supporting surface 111 is worn to a set depth, the fixing bolt 112 may be loosened to remove the worn supporting piece 110. Then, a new supporting piece 110 may be coupled to the one sealing block 10 by using the fixing bolt 112.

Also, the supporting piece 110 may be fitted into the one sealing block 10 by using a groove and a protrusion. That is, a groove may be formed in the one sealing block 10, and a protrusion, which is fitted into the groove formed in the one sealing block 10, may be formed in the supporting piece 110.

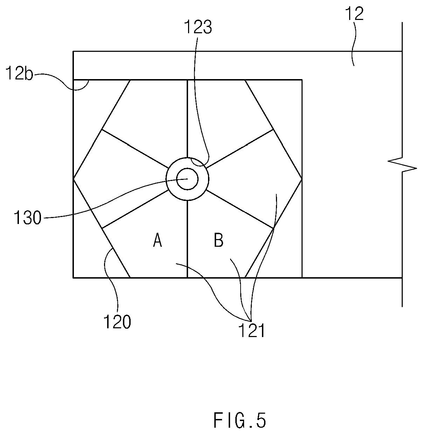

Referring to FIGS. 4 and 5, the gap adjustment piece 120 is rotatably coupled to each of both ends of the other sealing block 20 that presses the other surface of the sealing portion of the pouch, and includes a plurality of adjustment surfaces 121 having different heights provided along the circumferential surface (the circumference of the upper surface of the gap adjustment piece when viewed in FIG. 4).

That is, referring to FIG. 4, the bottom surface of the gap adjustment piece 120, which is supported by the other sealing block 20, has a horizontal surface, and the top surface facing the supporting piece has a plurality of adjustment surfaces 121 having different heights. Also, a boundary surface between the adjustment surfaces corresponding to each other is formed toward the center point of the gap adjustment piece 120. Accordingly, the plurality of adjustment surfaces 121 have the same area when viewed from the supporting piece.

When the gap adjustment piece 120 having the above structure is rotated, the plurality of adjustment surfaces 121 having different heights are sequentially supported by the support piece 110. Here, when any one adjustment surface 121 of the plurality of adjustment surfaces 121 is supported by the supporting piece 110, the distance between the pressing surfaces 11 and 21 provided on the pair of sealing blocks 10 and 20 may be widened and increased or narrowed and decreased according to the height of the adjustment surface supported by the supporting piece. Accordingly, the gap between the pressing surfaces 11 and 21 provided on the pair of sealing blocks 10 and 20 may be adjusted.

Here, the plurality of adjustment surfaces 121 formed on the gap adjustment piece 120 have different thicknesses in the up-down direction when viewed from the side surface of the gap adjustment piece 120. Accordingly, when viewed from the supporting piece, the plurality of adjustment surfaces 121 formed on the gap adjustment piece 120 have different heights.

Therefore, any one of the plurality of adjustment surfaces 121 having different heights in the gap adjustment piece 120 is supported by the supporting piece 110, and thus, the gap between the pressing surfaces 11 and 21 provided on the pair of sealing blocks 10 and 20 may be adjusted in a multi-stepwise manner.

Here, when viewed on the basis of the other sealing block 20, a height of an adjustment surface 121a having the lowest height among the plurality of adjustment surfaces 121 may be greater than that of the pressing surface 21 of the other sealing block 20, by 119 µm to 139 µm, preferably 128 µm to 131 µm, and optimally 129 µm. Here, when viewed on the basis of the one sealing block 10, a height of the supporting surface 111 of the supporting piece 110 supported by the adjustment surface 121 may be greater than that of the pressing surface 11 of the one sealing block 10, by 119 µm to 139 µm, preferably 128 µm to 131 µm, and optimally 129 µm. Accordingly, the minimum gap between the pressing surfaces 11 and 21 provided on the pair of sealing blocks 10 and 20 may be adjusted to 238 µm to 278 µm, and optimally 258 µm.

That is, the pressing surfaces 11 and 21 provided on the pair of sealing blocks 10 and 20 are spaced 258 µm apart from each other. This is because a minimum gap is required to prevent heat transfer between the pair of sealing blocks 10 and 20. When the gap is less than the minimum value, a defect may occur due to the heat transfer in the sealing portion of the pouch to be pressed by the pair of sealing blocks 10 and 20.

Also, referring to FIG. 4, the plurality of adjustment surfaces 121 may have the same height difference from the adjustment surface having the lowest height to the adjustment surface having the greatest height.

Here, the adjustment surface having the lowest height is indicated by "A" in the drawing, and the adjustment surface having the greatest height is indicated by "B" in the drawing.

In one example, the plurality of adjustment surfaces 121 may have a height difference of 18 µm to 22 µm and preferably 20 µm from the adjustment surface having the lowest height to the adjustment surface having the greatest height. Accordingly, the gap between the pressing surfaces 11 and 21 provided on the pair of sealing blocks 10 and 20 may be adjusted in units of 20 µm without separate measurement.

Also, when viewed on the basis of the other sealing block 20, a difference in height between the adjustment surface having the lowest height and the adjustment surface having the greatest height may be 100 µm. Accordingly, the gap between the pressing surfaces 11 and 21 provided on the pair of sealing blocks 10 and 20 may be increased to 100 µm. Also, when the gap between the pressing surfaces 11 and 21 provided on the pair of sealing blocks 10 and 20 is increased to 100 µm or more, the pressing force on the sealing portion of the pouch pressed between the pressing surfaces 11 and 21 provided on the pair of sealing blocks 10 and 20 becomes weakened, and thus, sealing failure may occur.

Here, the plurality of adjustment surfaces 121 may be arranged in order of height along the circumference of the gap adjustment piece 120 (in a counterclockwise direction when referring to FIG. 4). Accordingly, the gap between the pressing surfaces 11 and 21 provided on the pair of sealing blocks 10 and 20 may be adjusted in a multi-stepwise manner by only a small operation of the gap adjustment piece 120. That is, referring to FIG. 4, the plurality of adjustment surfaces 121 have a step shape in which the height is gradually reduced in a counterclockwise direction on the basis of the adjustment surface having the greatest height.

Here, the supporting surface 111 of the supporting piece 110 and the plurality of adjustment surfaces 121, which are supported by each other, may be provided with horizontal surfaces to come into surface contact with each other. Accordingly, the supporting force between the supporting surface 111 of the supporting piece 110 and the plurality of adjustment surfaces 121 may be increased.

Here, the supporting piece 110 and the gap adjustment piece 120 may be made of alloy tool steel and preferably made of SKD 61 that is hot die tool steel. Accordingly, the use cycle may be significantly extended.

Also, SKD 61 that is hot die tool steel may maintain strength and hardness even when exposed to high temperatures for a long period of time. That is, SKD 61 that is hot die tool steel has excellent high-temperature strength, high toughness, high resistance to softening, and low deformation due to heat treatment.

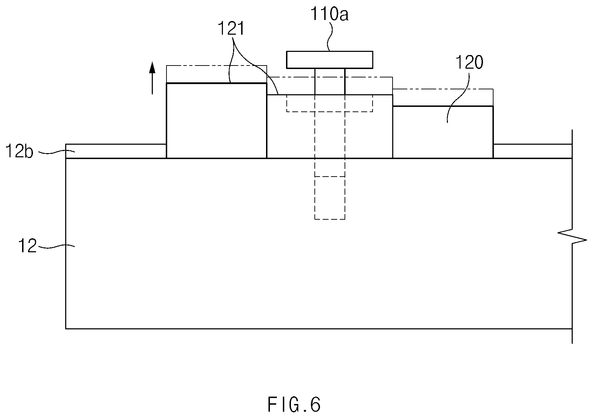

Also, referring to FIG. 6, the gap adjustment piece 120 may be rotatably coupled to the other sealing block 20 by a coupling bolt 130. That is, when the coupling bolt 130 is tightened, the gap adjustment piece 120 may be fixed to the sealing block 20 and not allowed to move, but when loosened, the gap adjustment piece 120 may not be fixed and allowed to rotate about the coupling bolt 130.

Also, the coupling bolt 130 includes a head portion and a threaded portion, and the head portion is inserted into an insertion groove 123 provided in the gap adjustment piece 120 and is thus prevented from protruding to the outside.

Here, the gap adjustment piece 120 has a polygonal shape suitable for a plurality of adjustment surfaces. That is, the gap adjustment piece has a hexagonal shape when having six adjustment surfaces, and the gap adjustment piece has a quadrangular shape when having four adjustment surfaces.

In addition, referring to FIG. 6, the other sealing block 20 may have a side wall 12b such that the side surface of gap adjustment piece 120 having the polygonal shape is supported thereby. As the side surface of the gap adjustment piece 120 is supported by the side wall 12b, the fixing force on the gap adjustment piece 120 may be increased. Here, in order to rotate the gap adjustment piece 120, the gap adjustment piece 120 has to be rotated in a state in which the fixing bolt is loosened so that the gap adjustment piece is lifted higher than the side wall 12b.

Hereinafter, the use state of the secondary battery sealing equipment having the above configuration according to the first embodiment of the present invention will be described.

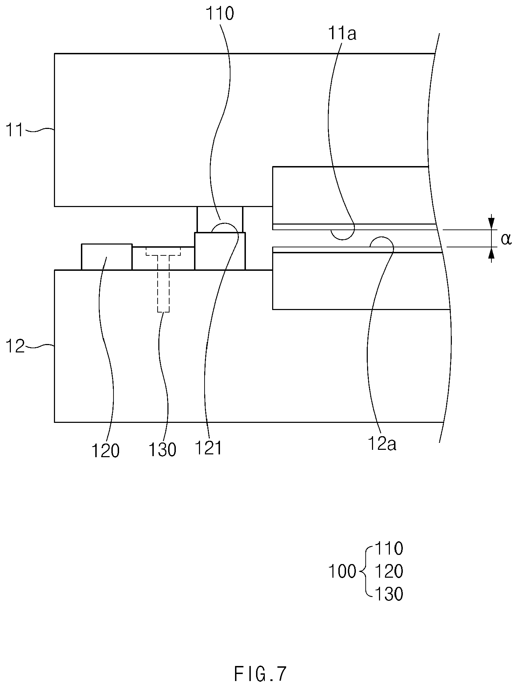

As illustrated in FIG. 7, as the gap adjustment piece 120 is rotated after loosening the coupling bolt 130, the adjustment surface 121 having the greatest height is adjusted to be positioned on the same vertical line as the supporting piece 110. Next, the gap adjustment piece 120 is fixed to the other sealing block 20 by tightening the coupling bolt 130. Then, the adjustment of a distance α between the pressing surfaces provided on the pair of sealing blocks 10 and 20 is completed. In this state, when the pair of sealing blocks 10 and 20 are moved to correspond to each other, the adjustment surface 121 having the greatest height and the supporting surface 111 of the supporting piece 110 are supported by each other. Accordingly, the pressing surfaces of the pair of sealing blocks press and seal the sealing portion of the pouch. At this time, the pressing surfaces of the pair of sealing blocks are kept farthest apart from each other.

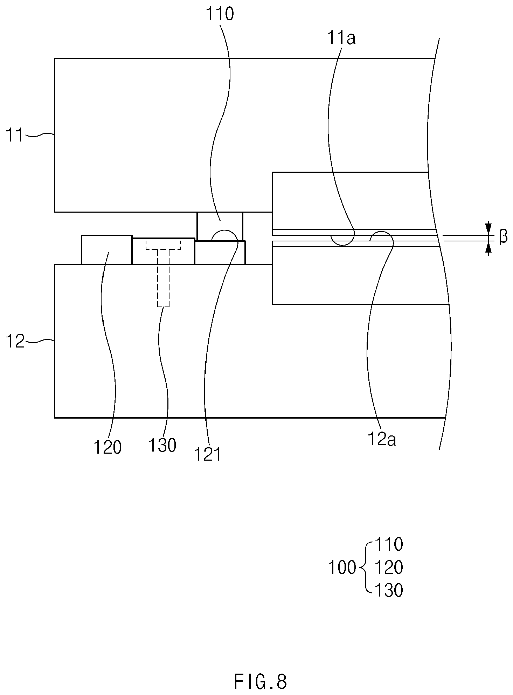

As illustrated in FIG. 8, as the gap adjustment piece 120 is rotated after loosening the coupling bolt 130, the adjustment surface 121 having the lowest height is adjusted to be positioned on the same vertical line as the supporting piece 110. Next, the gap adjustment piece 120 is fixed to the other sealing block 20 by tightening the coupling bolt 130. Then, the adjustment of a distance β between the pressing surfaces provided on the pair of sealing blocks 10 and 20 is completed. In this state, when the pair of sealing blocks are moved to correspond to each other, the adjustment surface 121 having the lowest height and the supporting surface 111 of the supporting piece 110 are supported by each other. Accordingly, the pressing surfaces of the pair of sealing blocks press and seal the sealing portion of the pouch. At this time, the pressing surfaces of the pair of sealing blocks are kept closest apart from each other.

Through the method described above, the gap between the pressing surfaces provided on the pair of sealing blocks may be adjusted in a multi-stepwise manner.

Therefore, the secondary battery sealing equipment according to the first embodiment of the present invention may conveniently adjust the gap between the pair of sealing blocks, and particularly, may adjust the gap between the pair of sealing blocks in a multi-stepwise manner. Accordingly, the convenience and efficiency of use and the continuity of work may be improved.

Hereinafter, in describing another embodiment of the present invention, components having the same functions as those in the foregoing embodiment are given the same reference numerals, and their duplicated description will be omitted.

### [Secondary battery sealing equipment according to the second embodiment of the present invention]

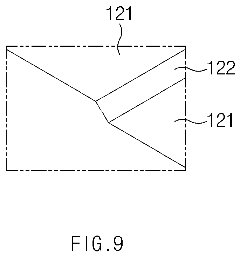

As illustrated in FIG. 9, the secondary battery sealing equipment according to the second embodiment of the present invention includes a gap adjustment device 100 for adjusting a gap between a pair of sealing blocks 10 and 20 in a multi-stepwise manner. The gap adjustment device 100 includes a supporting piece 110 and a gap adjustment piece 120 provided with adjustment surfaces 121 having different heights.

Here, a boundary surface 122 between corresponding adjustment surfaces 121 may be formed as an inclined surface. Accordingly, it is possible to significantly prevent damage to the boundary surface 122 between the corresponding adjustment surfaces 121, and to prevent an accident in which an external object collides with the boundary surface between the corresponding adjustment surfaces.

### [Gap adjustment device according to the third embodiment of the present invention]

When describing the gap adjustment device according to the third embodiment of the present invention with reference to FIG. 1, only the gap adjustment device 100 in the secondary battery sealing equipment according to the first embodiment may be separately manufactured, and then mounted to sealing equipment installed for a sealing process. That is, only the gap adjustment device 100 may be separately commercialized and produced. Accordingly, the compatibility and productivity may be enhanced.

That is, the gap adjustment device 100 according to the third embodiment of the present invention is to adjust a gap between a pair of sealing blocks that seal a sealing portion of a pouch. That is, the gap adjustment device 100 according to the third embodiment of the present invention includes: supporting pieces 110 provided at respective ends of one sealing block that presses one surface of the sealing portion of the pouch; and gap adjustment pieces 120 rotatably coupled to respective ends of the other sealing block that presses the other surface of the sealing portion of the pouch. Each of the gap adjustment pieces is provided with a plurality of adjustment surfaces having different heights along a circumferential surface, and one of the plurality of adjustment surfaces having different heights when rotating is supported by each of the supporting pieces to adjust the gap between the pair of sealing blocks.

Here, the gap adjustment device 100 has the same configuration and function as the gap adjustment device according to the first embodiment, and accordingly, duplicated descriptions thereof will be omitted.

The scope of the present invention is defined by the appended claims rather than the detailed description.

### [Description of the Symbols]

10, 20: Sealing block
11, 21: Pressing surface
100: Gap adjustment device
110: Supporting piece
111: Supporting surface
112: Fixing bolt
120: Gap adjustment piece
121: Adjustment surface
122: Inclined surface
130: Coupling bolt

## Claims

1. A gap adjustment device (100) for adjusting a gap between a pair of sealing blocks (10, 20) that seal a sealing portion of a pouch, the gap adjustment device (100) comprising:
supporting pieces (110) provided at respective ends of one sealing block (10) that presses one surface of the sealing portion of the pouch; and gap adjustment pieces (120);
**characterized in that** the gap adjustment pieces (120) are (128) rotatably coupled tc respective ends of the other sealing block (20) that presses the other surface of the sealing portion of the pouch,
and **in that** each of the gap adjustment pieces (120) is provided with a plurality of adjustment surfaces (121) having different heights along a circumferential surface, and one of the plurality of adjustment surfaces (121) having different heights when rotating is supported by each of the supporting pieces (110) to adjust the gap between the pair of sealing blocks (10, 20).

2. Secondary battery sealing equipment for pressing and sealing a sealing portion of a pouch, the secondary battery sealing equipment comprising:
a pair of sealing blocks configured to press and seal the sealing portion of the pouch; and
a gap adjustment device (100) according to claim 1 configured to adjust a gap between the pair of sealing blocks.

3. The secondary battery sealing equipment of claim 2, wherein, when viewed on the basis of the other sealing block (20), a height of the adjustment surface (121) having the lowest height among the plurality of adjustment surfaces (121) is greater by 119 µm to 139 µm than that of a pressing surface (21) of the other sealing block (20).

4. The secondary battery sealing equipment of claim 2, wherein, when viewed on the basis of the one sealing block (10), a height of a supporting surface (111) of the supporting piece (110) supported by the adjustment surface (121) is greater by 119 µm to 139 µm than that of a pressing surface (11) of the one sealing block (10).

5. The secondary battery sealing equipment of claim 2, wherein the plurality of adjustment surfaces (121) have the same height difference from the adjustment surface (121) having the lowest height to the adjustment surface (121) having the greatest height.

6. The secondary battery sealing equipment of claim 5, wherein the plurality of adjustment surfaces (121) have a height difference of 18 to 22 µm from the adjustment surface (121) having the lowest height to the adjustment surface (121) having the greatest height.

7. The secondary battery sealing equipment of claim 2, wherein the plurality of adjustment surfaces (121) are arranged in order of height along the circumference of the gap adjustment piece (120).

8. The secondary battery sealing equipment of claim 2, wherein the supporting surface (111) of the supporting piece (110) and the plurality of adjustment surfaces (121), which are supported by each other, are provided with horizontal surfaces to come into surface contact with each other.

9. The secondary battery sealing equipment of claim 2, wherein a boundary surface (122) between the corresponding adjustment surfaces (121) is formed as an inclined surface.

10. The secondary battery sealing equipment of claim 2, wherein each of the supporting piece (110) and the gap adjustment piece (120) is made of alloy tool steel.

11. The secondary battery sealing equipment of claim 2, comprising a coupling bolt (130) that rotatably couples the gap adjustment piece (120) to the other sealing block (20),
wherein, when the coupling bolt (130) is tightened, the gap adjustment piece (120) is fixed to the sealing block (20) and not allowed to move, but when loosened, the gap adjustment piece (120) is not fixed and allowed to rotate about the coupling bolt (130).

12. The secondary battery sealing equipment of claim 2, wherein the supporting piece (110) is detachably coupled to the one sealing block (10).

## Patentansprüche

1. Spaltanpassungsvorrichtung (100) zum Anpassen eines Spalts zwischen einem Paar von Dichtungsblöcken (10, 20), welche einen Dichtungsabschnitt eines Beutels abdichten, wobei die Spaltanpassungsvorrichtung (100) umfasst:
Stützteile (110), welche an jeweiligen Enden eines Dichtungsblocks (10) bereitgestellt sind, welcher eine Fläche des Dichtungsabschnitts des Beutels presst; und
Spaltanpassungsteile (120);
**dadurch gekennzeichnet, dass** die Spaltanpassungsteile (120) rotierbar mit jeweiligen Enden des anderen Dichtungsblocks (20) gekoppelt sind, welcher die andere Fläche des Dichtungsabschnitts des Beutels presst, und
dass jedes der Spaltanpassungsteile (120) mit einer Mehrzahl von Anpassungsflächen (121) bereitgestellt ist, welche unterschiedliche Höhen entlang einer Umfangsfläche aufweisen, und dass eine aus der Mehrzahl von Anpassungsflächen (121) unterschiedliche Höhen aufweist, wenn ein Rotieren gestützt ist durch jedes der Stützteile (110), um den Spalt zwischen dem Paar von Dichtungsblöcken (10, 20) anzupassen.

2. Sekundärbatterie-Dichtungsausrüstung zum Pressen und Abdichten eines Dichtungsabschnitts eines Beutels, wobei die Sekundärbatterie-Dichtungsausrüstung umfasst:
ein Paar von Dichtungsblöcken, welche dazu eingerichtet sind, den Dichtungsabschnitt des Beutels zu pressen und abzudichten; und
eine Spaltanpassungsvorrichtung (100) nach Anspruch 1, welche dazu eingerichtet ist, einen Spalt zwischen dem Paar von Dichtungsblöcken anzupassen.

3. Sekundärbatterie-Dichtungsausrüstung nach Anspruch 2, wobei, wenn an der Basis des anderen Dichtungsblocks (20) betrachtet, eine Höhe der Anpassungsfläche (121), welche die geringste Höhe unter der Mehrzahl von Anpassungsflächen (121) aufweist, um 119 µm bis 139 µm größer als diejenige einer Pressfläche (11) des anderen Dichtungsblocks (20) ist.

4. Sekundärbatterie-Dichtungsausrüstung nach Anspruch 2, wobei, wenn an der Basis des einen Dichtungsblocks (10) betrachtet, eine Höhe einer Stützfläche (111) des Stützteils (110), welche durch die Anpassungsfläche (121) gestützt ist, um 119 µm bis 139 µm größer als diejenige einer Pressfläche (11) des einen Dichtungsblocks (10) ist.

5. Sekundärbatterie-Dichtungsausrüstung nach Anspruch 2, wobei die Mehrzahl von Anpassungsflächen (121) die gleiche Höhendifferenz von der Anpassungsfläche (121), welche die geringste Höhe aufweist, zu der Anpassungsfläche (121) aufweist, welche die größte Höhe aufweist.

6. Sekundärbatterie-Dichtungsausrüstung nach Anspruch 5, wobei die Mehrzahl von Anpassungsflächen (121) eine Höhendifferenz von 18 bis 22 µm von der Anpassungsfläche (121), welche die geringste Höhe aufweist, zu der Anpassungsfläche (121) aufweist, welche die größte Höhe aufweist.

7. Sekundärbatterie-Dichtungsausrüstung nach Anspruch 2, wobei die Mehrzahl von Anpassungsflächen (121) in einer Reihenfolge der Höhe nach entlang dem Umfang der Spaltanpassungsvorrichtung (120) angeordnet ist.

8. Sekundärbatterie-Dichtungsausrüstung nach Anspruch 2, wobei die Stützfläche (111) des Stützteils (110) und die Mehrzahl von Anpassungsflächen (121), welche durch einander gestützt sind, mit horizontalen Flächen bereitgestellt sind, um in Flächenkontakt miteinander zu treten.

9. Sekundärbatterie-Dichtungsausrüstung nach Anspruch 2, wobei eine Grenzfläche (122) zwischen den entsprechenden Anpassungsflächen (121) als eine geneigte Fläche gebildet ist.

10. Sekundärbatterie-Dichtungsausrüstung nach Anspruch 2, wobei jedes der Stützteile (110) und des Spaltanpassungsteils (120) aus legiertem Werkzeugstahl hergestellt ist.

11. Sekundärbatterie-Dichtungsausrüstung nach Anspruch 2, umfassend einen Kopplungsbolzen (130), welcher das Spaltanpassungsteil (120) mit dem anderen Dichtungsblock (20) rotierbar koppelt,
wobei, wenn der Kopplungsbolzen (130) angezogen ist, das Spaltanpassungsteil (120) an dem Dichtungsblock (20) fixiert ist und es diesem nicht möglich ist, sich zu bewegen, aber wenn gelöst, das Spaltanpassungsteil (120) nicht fixiert ist und diesem möglich ist, um den Kopplungsbolzen (130) zu rotieren.

12. Sekundärbatterie-Dichtungsausrüstung nach Anspruch 2, wobei das Stützteil (110) lösbar an den einen Dichtungsblock (10) gekoppelt ist.

## Revendications

1. Dispositif de réglage d'espace (100) pour régler un espace entre une paire de blocs d'étanchéité (10, 20) qui étanche une partie d'étanchéité d'une poche, le dispositif de réglage d'espace (100) comprenant :
des pièces de maintien (110) prévues à des extrémités respectives d'un bloc d'étanchéité (10) qui appuie sur une surface de la partie d'étanchéité de la poche ; et
des pièces de réglage d'espace (120) ;
**caractérisé en ce que** les pièces de réglage d'espace (120) sont couplées rotatives à des extrémités respectives de l'autre bloc d'étanchéité (20) qui appuie sur l'autre surface de la partie d'étanchéité de la poche,
et **en ce que** chacune des pièces de réglage d'espace (120) est pourvue d'une pluralité de surfaces de réglage (121) présentant des hauteurs différentes le long d'une surface circonférentielle, et l'une de la pluralité de surfaces de réglage (121) présentant des hauteurs différentes lors de la rotation est maintenue par chacune des pièces de maintien (110) pour régler l'espace entre la paire de blocs d'étanchéité (10, 20).

2. Équipement d'étanchéité de batterie secondaire pour presser et étancher une partie d'étanchéité d'une poche, l'équipement d'étanchéité de batterie secondaire comprenant :
une paire de blocs d'étanchéité configurés pour presser et étancher la partie d'étanchéité de la poche ; et
un dispositif de réglage d'espace (100) selon la revendication 1 configuré pour régler un espace entre la paire de blocs d'étanchéité.

3. Équipement d'étanchéité de batterie secondaire selon la revendication 2, dans lequel, vu sur la base de l'autre bloc d'étanchéité (20), une hauteur de la surface de réglage (121) présentant la hauteur la plus basse parmi la pluralité de surfaces de réglage (121) est supérieure de 119 µm à 139 µm à celle d'une surface de pression (21) de l'autre bloc d'étanchéité (20).

4. Équipement d'étanchéité de batterie secondaire selon la revendication 2, dans lequel, vu sur la base d'un bloc d'étanchéité (10), une hauteur d'une surface de maintien (111) de la pièce de maintien (110) maintenue par la surface de réglage (121) est supérieure de 119 µm à 139 µm à celle d'une surface de pression (11) du bloc d'étanchéité (10).

5. Équipement d'étanchéité de batterie secondaire selon la revendication 2, dans lequel la pluralité de surfaces de réglage (121) présentent la même différence de hauteur entre la surface de réglage (121) présentant la hauteur la plus basse et la surface de réglage (121) présentant la hauteur la plus élevée.

6. Équipement d'étanchéité de batterie secondaire selon la revendication 5, dans lequel la pluralité de surfaces de réglage (121) présentent une différence de hauteur de 18 à 22 µm entre la surface de réglage (121) présentant la hauteur la plus basse et la surface de réglage (121) présentant la hauteur la plus élevée.

7. Équipement d'étanchéité de batterie secondaire selon la revendication 2, dans lequel la pluralité de surfaces de réglage (121) sont agencées par ordre de hauteur le long de la circonférence de la pièce de réglage d'espace (120).

8. Équipement d'étanchéité de batterie secondaire selon la revendication 2, dans lequel la surface de maintien (111) de la pièce de maintien (110) et la pluralité de surfaces de réglage (121), qui sont maintenues l'une par l'autre, sont pourvues de surfaces horizontales pour entrer en contact de surface l'une avec l'autre.

9. Équipement d'étanchéité de batterie secondaire selon la revendication 2, dans lequel une surface limite (122) entre les surfaces de réglage (121) correspondantes est formée comme une surface inclinée.

10. Équipement d'étanchéité de batterie secondaire selon la revendication 2, dans lequel chacune de la pièce de maintien (110) et de la pièce de réglage d'espace (120) est en acier à outils allié.

11. Équipement d'étanchéité de batterie secondaire selon la revendication 2, comprenant un boulon d'accouplement (130) qui couple en rotation la pièce de réglage d'espace (120) à l'autre bloc d'étanchéité (20),
dans lequel, lorsque le boulon d'accouplement (130) est serré, la pièce de réglage d'espace (120) est fixée au bloc d'étanchéité (20) et ne peut pas bouger, mais lorsqu'il est desserré, la pièce de réglage d'espace (120) n'est pas fixée et peut tourner autour du boulon d'accouplement (130).

12. Équipement d'étanchéité de batterie secondaire selon la revendication 2, dans lequel la pièce de maintien (110) est couplée de manière détachable au bloc d'étanchéité (10).
